# FASCICULE DE BREVET EUROPEEN

(11) **EP 0 994 758 B1**
(45) Date de publication et mention de la délivrance du brevet: **23.04.2003**
(21) Numéro de dépôt: 98936461.7
(22) Date de dépôt: 07.07.1998
(51) Int. Cl.: B23B 47/34

(54) **TETE DE PERCAGE A EFFET VIBRATOIRE**
BOHRKOPF MIT VIBRATIONSEFFEKT
DRILLING HEAD WITH VIBRATORY EFFECT

(30) Priorité: 07.07.1997 FR 9708601
(43) Date de publication de la demande: 26.04.2000
(73) Titulaire: INSTITUT NATIONAL POLYTECHNIQUE DE GRENOBLE, F-38031 Grenoble (FR)
(72) Inventeur: BRUN-PICARD, Daniel, F-13480 Cabries (FR); GOUSKOV, Alexandre, Moscou, 123458 (RU)
(74) Mandataire: Casalonga, Axel
(86) Numéro de dépôt international: FR9801454
(87) Numéro de publication internationale: WO99002291

(56) Documents cités:
- EP-A- 0 292 651
- EP-A- 0 489 359
- US-A- 2 453 136
- PATENT ABSTRACTS OF JAPAN vol. 001, no. 082 (M-028), 29 juillet 1977 & JP 52 024394 A (SHINEI SEISAKUSHO:KK), 23 février 1977

## Description

La présente invention concerne le domaine des opérations d'usinage de pièces telles que des perçages, notamment des perçages de grandes profondeurs.

On connaît des machines de perçage qui comprennent un mécanisme conçu pour provoquer, lors de l'avance du foret, des mouvements forcés d'aller-retour sur une course déterminée, ces mouvements forcés faisant varier l'épaisseur du copeau, permettant sa fragmentation et facilitant ainsi son évacuation. Malgré ces avantages, de tels mécanismes sont complexes, encombrants et coûteux.

Le document EP-A-0 292 651, qui correspond au préambule de la revendication 1, décrit un mécanisme pour machine de perçage dans lequel le porte-outil et le support sont maintenus en butée sous l'effet de ressorts. Lorsque le porte-outil et le support sont écartés de leur position en butée, ces ressorts, comprimés sous l'effort de l'outil, permettent l'obtention de vibrations axiales.

Le but de la présente invention est de proposer une tête de perçage de structure particulièrement simple, permettant de produire des mouvements d'aller-retour de l'outil au cours de son avance.

La tête de perçage selon la présente invention comprend la combinaison des caractéristiques de la revendication 1

Selon l'invention, la tête de montage peut avanteusement comprendre des moyens de réglage de la raideur desdits moyens déformables élastiquement de liaison en translation axiale.

Selon une variante de l'invention, les moyens de guidage comprennent deux plaques annulaires déformables axialement, comprenant une partie intérieure et une partie extérieure respectivement reliées au support et au porte-outil et reliées entre elles par des branches non radiales.

Selon une variante de l'invention, les moyens de guidage comprennent une glissière à billes.

Selon une autre variante de l'invention, les moyens déformables élastiquement de liaison en translation axiale comprennent au moins une lame de ressort disposée dans un plan radial, qui est fixée en deux endroits espacés le long de sa longueur d'une part au support et d'autre part au porte-outil.

Selon une variante préférée de l'invention, les moyens déformables élastiquement de liaison en translation axiale comprennent deux lames de ressort disposées parallèlement dans un plan radial et de part et d'autre de l'axe, lesdites lames étant fixées d'une part au support et d'autre part au porte-outil, respectivement en un endroit médian et en deux endroits espacés de cet endroit médian et de part et d'autre dans le sens de leur longueur.

Selon l'invention, des moyens de réglage de la distance entre lesdits endroits de fixation de la ou des lames de ressort sont de préférence prévus.

Selon une autre variante de l'invention, les moyens déformables élastiquement de liaison en translation axiale comprennent au moins un ressort sensiblement cylindrique.

Selon l'invention, le ressort cylindrique peut avantageusement comprendre un cylindre qui présente dans sa paroi des ouverture décalées de manière à former des portions périphériques déformables élastiquement dans le sens axial.

Selon l'invention, les extrémités du ressort cylindrique sont de préférence fixées respectivement au support et au porte-outil.

Selon l'invention, le support comprend de préférence une partie cylindrique d'accouplement à la machine prolongée par une partie cylindrique dans laquelle s'étend au moins partiellement le porte-outil.

Selon l'invention, la tête de perçage comprend, dans une variante, des moyens d'amenée d'un fluide à l'outil, comprenant un canal s'étendant axialement au travers du support, un canal s'étendant axialement au travers du porte-outil et un conduit reliant lesdits canaux et déformable ou souple axialement. La présente invention sera mieux comprise à l'étude de têtes de perçage sur une machine d'un outil pénétrant tel qu'un foret, décrits à titres d'exemples non limitatifs en référence au dessin sur lequel :
- la figure 1 représente une vue de côté en élévation d'une première tête de perçage selon l'invention ;
- la figure 2 représente une vue de dessous, côté outil, de la tête de perçage de la figure 1 ;
- la figure 3 représente une coupe radiale selon III-III de la tête de perçage pécitée, repérée sur les figures 1 et 5 ;
- la figure 4 représente une coupe axialeselon IV-IV de la tête de perçage précitée, dans le plan de la figure 1 et repérée sur la figure 3 ;
- la figure 5 représente une coupe axiale selon V-V de la tête de perçage précitée, perpendiculairement au plan de coupe de la figure 4, repérée sur les figures 1 et 3 ;
- la figure 6 représente une coupe axiale d'une seconde tête de perçage selon la présente invention ;
- et la figure 7 représente une coupe axiale d'un ressort de la tête de perçage de la figure 6.

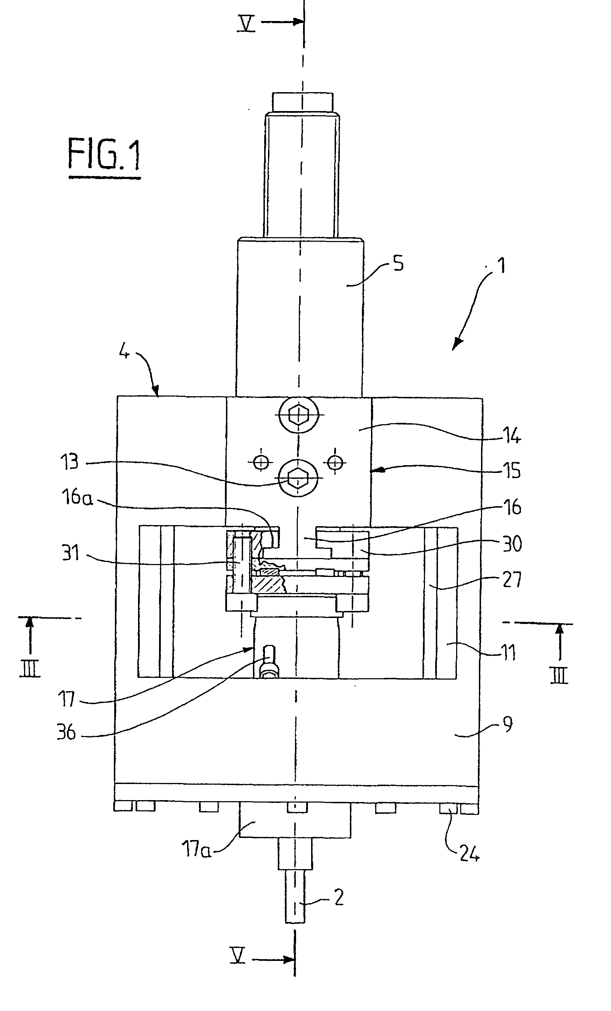

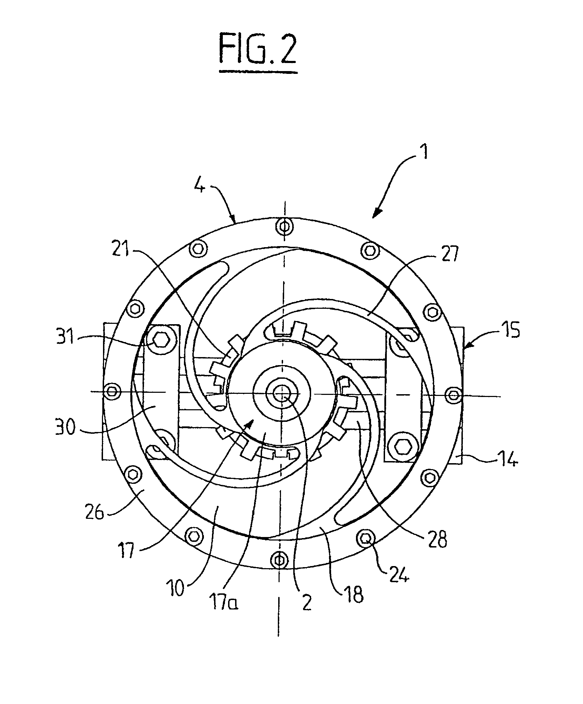

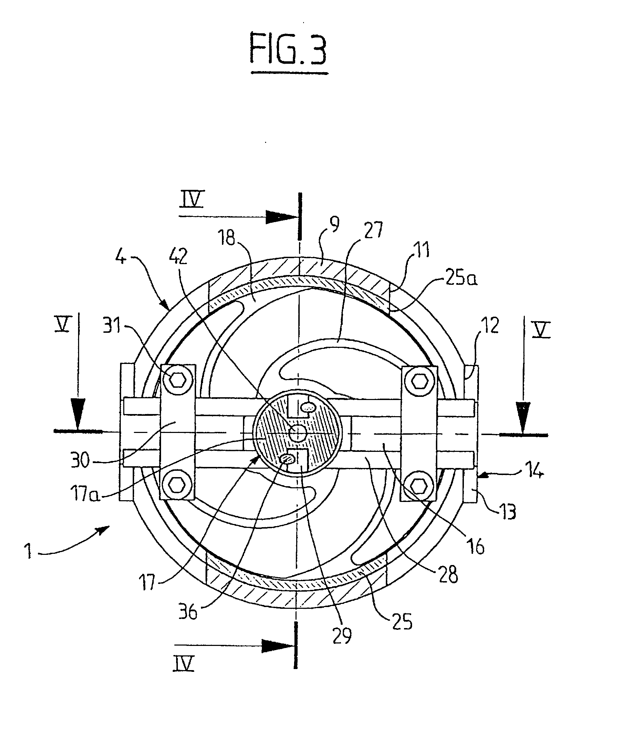

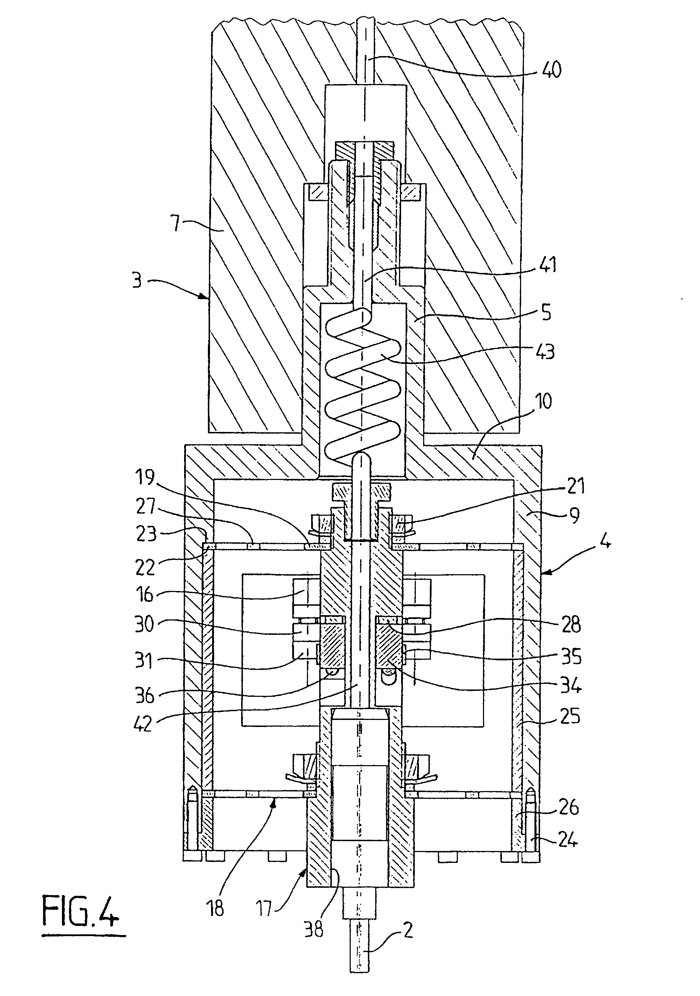

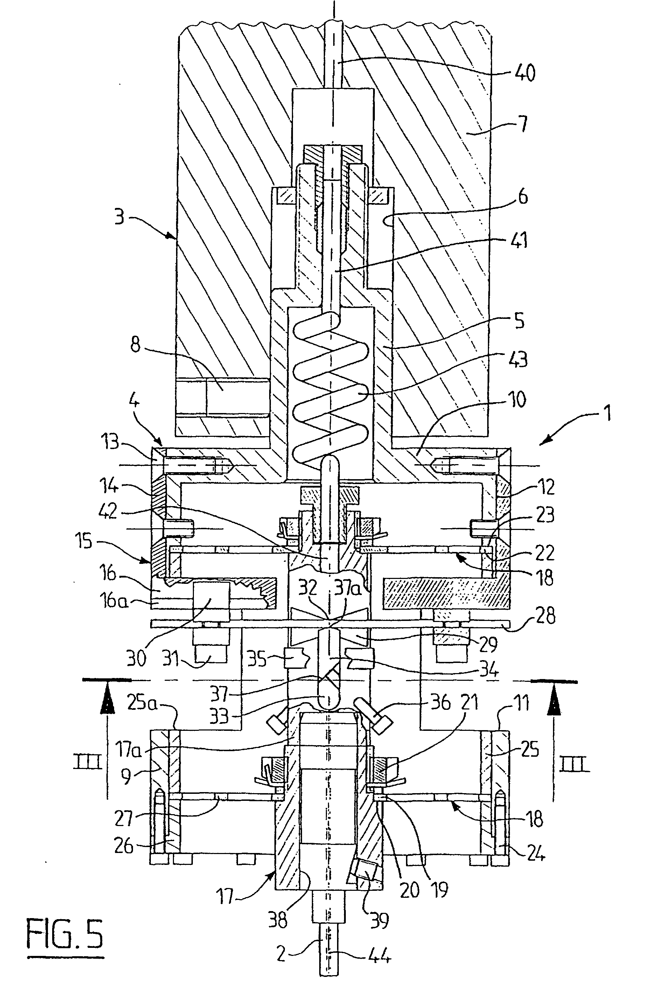

En se reportant aux figures 1 à 5, on voit qu'on a représenté une tête de perçage repérée d'une manière générale par la référence 1, d'un outil pénétrant constitué par un foret 2, sur une machine 3 à axe d'usinage vertical.

La tête de perçage 1 comprend un support axial repéré d'une manière générale par la référence 4, qui comprend une partie cylindrique 5 engagée dans un alésage 6 d'un mandrin 7 de la machine 3 et bloquée dans cet alésage 6 par une vis radiale 8.

Le support 4 comprend en outre une partie cylindrique 9 qui prolonge vers le bas la partie cylindrique 5, qui est de diamètre plus grand que cette partie cylindrique 5 et qui est reliée à cette dernière par un disque radial 10. Cette partie cylindrique 9 comprend, sensiblement dans sa partie médiane, deux grandes ouvertures opposées 11 et deux méplats opposés 12 qui sont formés dans les parties supérieures restantes au-dessus des ouvertures 11.

Contre les méplats 12 sont fixées, par l'intermédiaire de vis 13, les branches verticales 14 d'équerres 15 dont les branches horizontales 16 s'étendent au travers de la partie supérieure des ouvertures 11 de la partie cylindrique 9, les faces inférieures de ces branches 16 présentant des glissières 16a alignées.

La tête de perçage 1 comprend en outre un porte-outil axial 17 qui comprend un cylindre 17a qui s'étend axialement à l'intérieur de la partie cylindrique 9 du support 4 et à distance de sa paroi.

La partie supérieure et la partie inférieure du cylindre 17a sont reliées à la partie supérieure et à la partie inférieure de la partie cylindrique 9 du support 4, de part et d'autre des ouvertures 11, par des disques de suspension et de guidage axial 18.

Les disques 18 présentent des anneaux intérieurs 19 fixés axialement en appui contre des épaulements 20 du cylindre 17a grâce à des écrous 21 ainsi que des anneaux extérieurs 22 fixés axialement dans la partie cylindrique 9 du support 4, entre un épaulement 23 de cette partie cylindrique 9 et des vis axiales 24, par l'intermédiaire d'entretoises cylindriques 25 et 26, l'entretoise intermédiaire 25 présentant des ouvertures opposées 25a correspondant aux ouvertures opposées 11 de la partie cylindrique 9. En outre, les anneaux inférieurs 19 et les anneaux extérieurs 22 des disques 18 sont reliés par des branches 27 qui ne s'étendent pas radialement, leurs extrémités étant décalées angulairement d'environ 60°.

La tête de perçage 1 comprend en outre deux lames de ressort 28 qui s'étendent parallèlement dans un plan radial, de part et d'autre du cylindre 17a du porte-outil 17 et en-dessous des branches 16 des équerres 15.

Les parties médianes des lames 28 sont engagées dans des fentes latérales opposées 29 du cylindre 17a du porte-outil 17. De part et d'autre et à distance de leur partie médiane, les lames 28 sont fixées aux glissières 16a des équerres 16 grâce à des coulisseaux 30 et des vis 31, de façon réglable dans le sens de leur longueur.

Les faces supérieures des fentes 29 du cylindre 17a sont en forme de V de manière à présenter une pointe 32 contre lesquelles viennent en appui les lames 28. En outre, le cylindre 17a du porte-outil 17 présente des lamages axiaux 33 qui débouchent dans les fentes 29 par leurs faces inférieures et dans lesquelles sont disposés des doigts d'appui 34 maintenus dans ces lamages 33 par une bague périphérique 35 entourant le cylindre 17a.

Des vis 36 engagées de façon inclinée dans le cylindre 17a du porte-outil 17 prennent appui contre des faces inférieures inclinées 37 des doigts 34. Les vis 36 permettant de déplacer les doigts 34 vers le haut pour que leurs extrémités supérieures arrondies 37a viennent prendre appui contre les lames 28 et appliquer ces dernières contre les sommets 32 des fentes 29. Ainsi, les parties médianes des lames 28 sont prises, axialement, en appui ponctuel entre les sommets 32 et les doigts 34.

Les vis 30 des coulisseaux 30 et les vis 36 sont accessibles au travers des ouvertures 11 et 25a.

Par ailleurs, la partie inférieure du cylindre 17a du porte-outil 17 présente un alésage axial 38 dans lequel est fixée la partie supérieure du foret 2 grâce à une vis de blocage 39.

Enfin, le mandrin 7 de la machine 3, la partie cylindrique 5 du support 4 et le porte-outil 17 présentent des passages axiaux 40, 41 et 42. Le passage axial 42 du support 4 et le passage axial 42 du porte-outil 17, situés à distance l'un de l'autre, sont reliés par un conduit souple en serpentin 43. Ainsi, le passage 40 du mandrin 7, le serpentin 43 et le passage axial 42 du porte-outil 17 constituent un conduit d'amenée d'un fluide à un passage axial 44 du foret 2.

La tête de perçage 1 qui vient d'être décrite peut être utilisée de la manière suivante.

Lorsque le mandrin 7 de la machine 3 et le support 4 qui lui est lié se déplacent par rapport à une pièce à percer non représentée, sous l'effet de moyens d'avance commandée et constante de la machine 3, les efforts de perçage sont transmis au porte-outil 17 par les lames de ressort 28. Les disques de guidage 18 et le serpentin 43 sont construits de manière à pouvoir se déformer d'une façon telle que leurs déformations n'ont aucune influence notable sur lesdits efforts.

Les efforts de pénétration du foret provoque une flexion des lames de ressort 28 de part et d'autre des sommets 32 des fentes 29 et des doigts opposés 24 et jusqu'aux coulisseaux 30.

La raideur des lames de ressort 28 et la position des coulisseaux 30 le long des glissières 16a étant bien choisies, il peut alors se produire, lors de l'avance commandée du support 4, un phénomène vibratoire auto-entretenu provoquant des mouvements axiaux d'aller-retour ou oscillations axiales du foret 2 qui peuvent avantageusement être synchronisés avec la rotation relative du foret 2 par rapport à la pièce à percer.

Ces mouvements d'aller-retour auto-entretenus lors de l'avance du foret 2 peuvent engendrer une variation de l'épaisseur du ou des copeaux formés.

Dans la mesure où le mouvement de recul du foret 2 par rapport à l'avance du support 4 est tel que son ou ses arêtes de coupe s'approchent, atteignent ou vont au-delà de la surface usinée par elles, cette variation d'épaisseur peut être telle que les copeaux se fragmentent de façon intermittente.

Ainsi, l'évacuation des copeaux, notamment sous l'effet du fluide amené au travers de la tête 1 et du foret 2, peut être grandement facilitée.

En outre, en particulier lors de l'exécution de perçage de grande profondeur, les oscillations axiales ou mouvements axiaux d'aller-retour auto-entretenus du foret 2 peuvent permettre, avec ou sans fragmentation du ou des copeaux formés, une absorption au moins partielle des vibrations éventuelles du foret par rapport à la pièce, notamment des vibrations axiales et/ou transversales.

En conséquence, la tête de perçage 1 permet d'améliorer la rectitude des perçages, de réduire l'usure du foret et d'améliorer la qualité de la surface interne des trous.

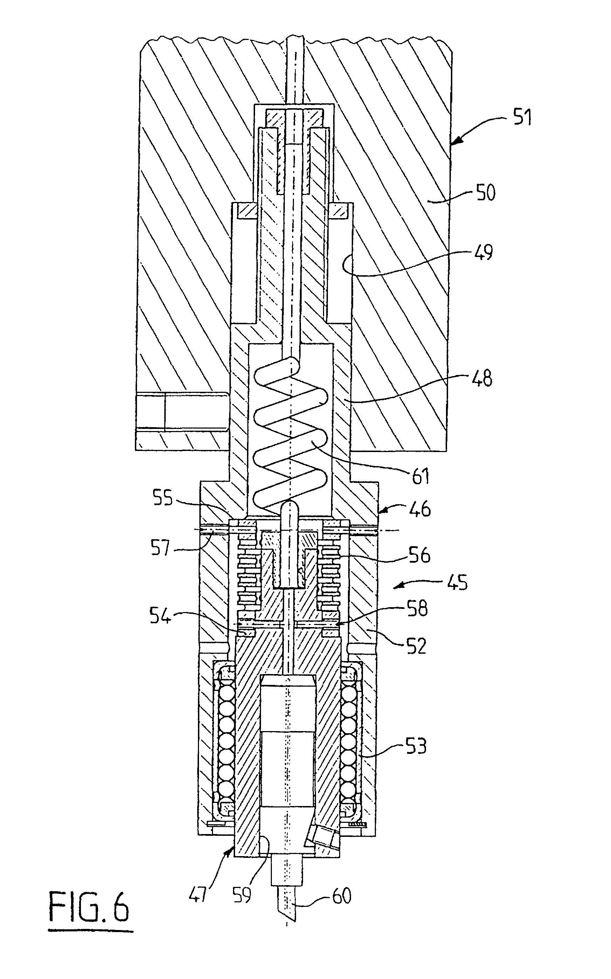

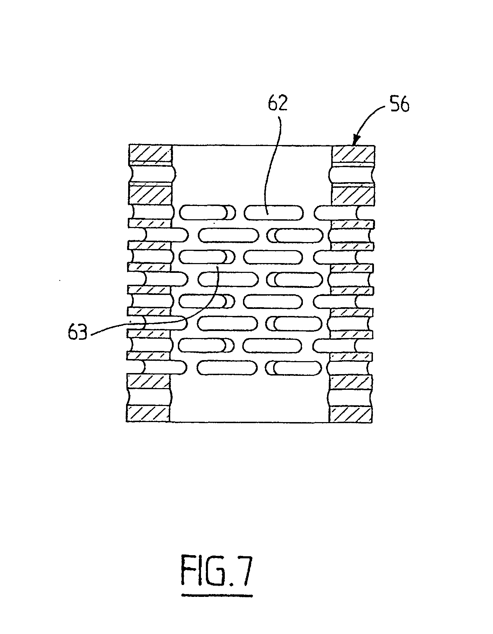

En se reportant maintenant aux figures 6 et 7, on voit qu'on a représenté une tête de perçage simplifiée, repérée d'une manière générale par la référence 45, qui comprend un support 46 et un porte-outil 47.

Le support 46 présente une partie cylindrique 48 engagée dans un alésage 49 d'un mandrin 50 d'une machine 51 et une partie cylindrique 52 qui prolonge la partie cylindrique 48 et qui présente un diamètre légèrement plus grand. Le porte-outil 48 se présente sous la forme d'un cylindre engagé à l'intérieur et à distance de la partie cylindrique 52 du support 46.

Entre la partie inférieure du porte-outil 48 et la partie inférieure de la partie cylindrique 52 du support 46 est disposée une glissière à billes 53 permettant le guidage axial du porte-outil 47 par rapport au support 46.

La partie supérieure du porte-outil 47 présente un diamètre réduit déterminant un épaulement 54. Entre cet épaulement 54 et le fond 55 de la partie cylindrique 52 du support 46 est disposé un ressort 56 se présentant sous la forme d'un cylindre. La partie supérieure de ce ressort 56 est fixée à la partie supérieure de la partie cylindrique 52 du support 46 grâce à des vis radiales 57 et la partie inférieure du ressort 56 est reliée au porte-outil 47 grâce à des vis radiales 58.

Le porte-outil 47 présente un alésage 59 dans lequel est fixé un foret 60.

Comme dans l'exemple précédent, le mandrin 50, la partie cylindrique 58 du support 46, le porte-outil 47 et le foret 60 présentent un conduit d'amenée d'un fluide, le canal du support 46 et le canal du porte-outil 47 étant reliés comme précédemment par un serpentin 61.

En se reportant plus particulièrement à la figure 7, on voit que le ressort cylindrique 56 est construit à partir d'un cylindre dans la paroi duquel sont usinées des ouvertures oblonges dans le sens périphérique, qui sont décalées les unes par rapport aux autres de manière à ménager des portions périphériques 63 susceptibles d'être déformées élastiquement dans le sens axial.

La tête de montage 45 qui vient d'être décrite en référence aux figures 6 et 7 fonctionne de la même manière que la tête de perçage 1 décrite en référence aux figures 1 à 5.

En effet, les efforts de pénétration du foret 60 sur la pièce à usiner lors d'une avance commandée du support 46 par rapport à la pièce à usiner, non représentée, sont obtenus par l'intermédiaire du ressort cylindrique 56, sans que la glissière à billes 53 et le serpentin 61 n'aient d'influence notable sur ces efforts.

Les efforts en rotation sont repris par les vis 57 et 58 et par le ressort cylindrique 56 dans son sens périphérique. Les efforts axiaux sont transmis par le ressort cylindrique 56, notamment par ses portions 63.

Dans la mesure où le ressort 56 présente des dimensions et des ouvertures 63 bien choisies, il peut se produire des mouvements vibratoires auto-entretenus d'aller-retour ou des oscillations axiales du foret lors de l'avance commandée du support 46.

## Revendications

1. Tête de perçage adaptée pour porter un outil pénétrant tel qu'un foret sur une machine présentant une axe d'usinage, comprenant un support muni de moyens d'accouplement à une machine ; un porte-outil muni de moyens de fixation d'un outil ; des moyens de guidage selon l'axe d'usinage du ports-outil par rapport au support ; **caractérisée par le fait qu'**elle comprend des moyens déformables élastiquement dimensionnés de manière à produire de façon auto-entretenue des mouvements axiaux d'aller-retour ou vibratoires du porte-outil lors de l'avance commandée relative du support par rapport à la pièce à usiner ; lesdits moyens déformables élastiquement (18) comprenant des parties (19, 22) espacées l'une par rapport à l'autre et reliées ou fixées respectivement au porte-outil (17) et au support (4) de manière à constituer des moyens de suspension et de liaison en translation axiale du porte-outil au support.

2. Tête de perçage selon la revendication 1, **caractérisée par le fait qu'**elle comprend des moyens de réglage de la raideur desdits moyens déformables élastiquement de liaison.

3. Tête de perçage selon les revendications 1 et 2, **caractérisée par le fait que** lesdits moyens de guidage comprennent deux plaques (18) déformables axialement, comprenant une partie intérieure et une partie extérieure respectivement reliées au support et au porte-outil et reliées entre elles par des branches (27) non radiales.

4. Tête de perçage selon l'une quelconque des revendications précédentes, **caractérisée par le fait que** lesdits moyens de guidage comprennent une glissière à billes (53).

5. Tête de perçage selon l'une quelconque des revendications précédentes, **caractérisée par le fait que** lesdits moyens déformables élastiquement de liaison comprennent au moins une lame de ressort (28) disposée dans un plan radial, qui est fixée en deux endroits espacés le long de sa longueur d'une part au support et d'autre part au porte-outil.

6. Tête de perçage selon l'une quelconque des revendications précédentes, **caractérisée par le fait que** lesdits moyens déformables élastiquement de liaison comprennent deux lames de ressort disposées parallèlement dans un plan radial et de part et d'autre de l'axe, lesdites lames étant fixées d'une part au support et d'autre part au porte-outil, respectivement en un endroit médian et en deux endroits espacés de cet endroit médian et de part et d'autre dans le sens de leur longueur.

7. Tête de perçage selon l'une des revendications 5 et 6, **caractérisée par le fait qu'**elle comprend des moyens de réglage de la distance entre lesdits endroits de fixation de la ou des lames de ressort.

8. Tête de perçage selon l'une quelconque des revendications précédentes, **caractérisée par le fait que** lesdits moyens déformables élastiquement de liaison comprennent au moins un ressort sensiblement cylindrique (56).

9. Tête de perçage selon la revendication 8, **caractérisée par le fait que** ledit ressort cylindrique (56) comprend un cylindre qui présente dans sa paroi des ouvertures (62) décalées de manière à former des portions périphériques (63) déformables élastiquement dans le sens axial.

10. Tête de perçage selon l'une quelconque des revendications précédentes, **caractérisée par le fait que** les extrémités dudit ressort cylindrique (56) sont fixées (57, 58) respectivement au support et au porte-outil.

11. Tête de perçage selon l'une quelconque des revendications précédentes, **caractérisée par le fait que** le support comprend une partie cylindrique (5) d'accouplement à la machine prolongée par une partie cylindrique (9) dans laquelle s'étend au moins partiellement le porte-outil (17).

12. Tête de perçage selon l'une quelconque des revendications précédentes, **caractérisée par le fait qu'**elle comprend des moyens (41, 42, 43) d'amenée d'un fluide à l'outil, comprenant un canal s'étendant axialement au travers du support, un canal s'étendant axialement au travers du porte-outil et un conduit reliant lesdits canaux et déformable ou souple axialement.

## Patentansprüche

1. Bohrkopf zum Einspannen eines Eindring-Werkzeugs wie etwa eines Bohrers für eine Maschine mit einer Bearbeitungsachse, einen Support mit Einrichtungen zur Kupplung mit der Maschine, einen Werkzeughalter mit Befestigungseinrichtungen eines Werkzeugs und Einrichtungen zur Führung des Werkzeughalters in der Bearbeitungsachse in Bezug auf den Support umfassend,
**dadurch gekennzeichnet,**
**dass** er elastisch verformbare Einrichtungen umfasst, die so dimensioniert sind, dass sie während des gesteuerten Vorschubs des Supports in Bezug auf das zu bearbeitende Werkstück sich selbst unterhaltende axiale Vor- und Zurückbewegungen oder Vibrationen des Werkzeughalters erzeugen, und die genannten elastisch verformbaren Einrichtungen (18) Teile (19, 22) umfassen, die voneinander beabstandet sind und jeweils mit dem Werkzeughalter (17) und dem Support (4) verbunden oder an dem Werkzeughalter (17) und dem Support (4) festgemacht sind, so dass sie axial verschiebbare Aufhängungs- und Verbindungseinrichtungen zwischen Werkzeughalter und Support bilden.

2. Bohrkopf nach Anspruch 1, **dadurch gekennzeichnet, dass** er Regulierungseinrichtungen der Steifigkeit der genannten elastisch verformbaren Verbindungseinrichtungen umfasst.

3. Bohrkopf nach den Ansprüchen 1 und 2, **dadurch gekennzeichnet, dass** die' genannten Führungseinrichtungen zwei axial verformbare Platten (18) umfassen, die einen inneren Teil und einen äußeren Teil aufweisen, verbunden mit dem Support und dem Werkzeughalter und miteinander durch nicht-radiale Zweige (27) verbunden.

4. Bohrkopf nach einem der vorangehenden Ansprüche, **dadurch gekennzeichnet, dass** die genannten Führungseinrichtungen eine Kugelführung (53) umfassen.

5. Bohrkopf nach einem der vorangehenden Ansprüche, **dadurch gekennzeichnet, dass** die genannten elastisch verformbaren Verbindungseinrichtungen wenigstens ein in einer radialen Ebene angeordnetes Federblatt (28) umfassen, das an zwei längs seiner Länge beabstandeten Stellen einerseits am Support und andrerseits am Werkzeughalter befestigt ist.

6. Bohrkopf nach einem der vorangehenden Ansprüche, **dadurch gekennzeichnet, dass** die genannten elastisch verformbaren Verbindungseinrichtungen zwei Federblätter umfassen, parallel in einer radialen Ebene und beiderseits der Achse angeordnet, wobei diese Blätter einerseits am Support befestigt sind und andrerseits am Werkzeughalter, jeweils an einer mittleren Stelle und an zwei von dieser mittleren Stelle beiderseits in der Richtung ihrer Länge beabstandeten Stellen.

7. Bohrkopf nach einem der Ansprüche 5 und 6, **dadurch gekennzeichnet, dass** er Regulierungseinrichtungen des Abstands zwischen den genannten Befestigungsstellen des Federblatts oder der Federblätter umfasst.

8. Bohrkopf nach einem der vorangehenden Ansprüche, **dadurch gekennzeichnet, dass** die genannten elastisch verformbaren Verbindungseinrichtungen wenigstens eine im Wesentlichen zylindrische Feder (56) umfassen.

9. Bohrkopf nach Anspruch 8, **dadurch gekennzeichnet, dass** die zylindrische Feder (56) einen Zylinder umfasst, der in seiner Wand Öffnungen (62) aufweist, die so versetzt sind, dass sie periphere Teile bzw. Abschnitte (63) bilden, die in axialer Richtung elastisch verformbar sind.

10. Bohrkopf nach einem der vorangehenden Ansprüche, **dadurch gekennzeichnet, dass** die Enden der genannten zylindrischen Feder (56) jeweils an dem Support und an dem Werkzeughalter befestigt sind (57, 58).

11. Bohrkopf nach einem der vorangehenden Ansprüche, **dadurch gekennzeichnet, dass** der Support einen zylindrischen Teil (5) zur Kupplung mit der Maschine umfasst, der durch einen zylindrischen Teil (9) verlängert wird, in dem sich wenigstens partiell der Werkzeughalter (17) ausdehnt.

12. Bohrkopf nach einem der vorangehenden Ansprüche, **dadurch gekennzeichnet, dass** er Zuführungseinrichtungen (41, 42, 43) eines Fluids zum Werkzeug umfasst, mit einem sich axial durch den Support erstreckenden Kanal, einem sich axial durch den Werkzeughalter erstreckenden Kanal, und einer Leitung, die die genannten Kanäle verbindet und die axial verformbar oder nachgiebig ist.

## Claims

1. Drilling head designed to carry a penetrating tool such as a drill bit on a machine having a machining axis, comprising a support equipped with means of coupling it to a machine; a tool holder provided with means for attaching a tool; means for guiding the tool holder along the machining axis with respect to the support; **characterized in that** it comprises elastically deformable means dimensioned in such a way as to produce, in a self-sustaining manner, reciprocating or vibrating axial movements of the tool holder during the controlled relative advance of the support with respect to the workpiece; the said elastically deformable means (18) comprising parts (19, 22) spaced apart and connected or fixed to the tool holder (17) and to the support (4) respectively so as to form means for suspending the tool holder from the support and for linking the former to the latter in terms of axial translation.

2. Drilling head according to Claim 1,
**characterized in that** it comprises means for adjusting the stiffness of the said elastically deformable connecting means.

3. Drilling head according to Claims 1 and 2, **characterized in that** the said guide means comprise two axially deformable plates (18) comprising an inner part and an outer part which are connected respectively to the support and to the tool holder and which are joined together by non-radial branches (27).

4. Drilling head according to any one of the preceding claims, **characterized in that** the said guide means comprise a ball-type slideway (53).

5. Drilling head according to any one of the preceding claims, **characterized in that** the said elastically deformable connecting means comprise at least one spring leaf (28) arranged in a radial plane, which is fixed at two points spaced along its length to, on the one hand, the support and, on the other hand, the tool holder.

6. Drilling head according to any one of the preceding claims, **characterized in that** the said elastically deformable connecting means comprise two spring leaves arranged parallel to each other in a radial plane and one on each side of the axis, the said leaves being fixed to, on the one hand, the support and, on the other hand, the tool holder, at a mid-point and at two points spaced from this mid-point on each side thereof in the direction of their length, respectively.

7. Drilling head according to either of Claims 5 and 6, **characterized in that** it comprises means for adjusting the distance between the said points of attachment of the said spring leaf or leaves.

8. Drilling head according to any one of the preceding claims, **characterized in that** the said elastically deformable connecting means comprise at least one essentially cylindrical spring (56).

9. Drilling head according to Claim 8,
**characterized in that** the said cylindrical spring (56) comprises a cylinder which, in its wall, has offset openings (62) so as to form peripheral portions (63) which are elastically deformable in the axial direction.

10. Drilling head according to any one of the preceding claims, **characterized in that** the ends of the said cylindrical spring (56) are fixed (57, 58) to the support and to the tool holder, respectively.

11. Drilling head according to any one of the preceding claims, **characterized in that** the support comprises a cylindrical part (5) for coupling to the machine, extended by a cylindrical part (9) into which the tool holder (17) at least partially extends.

12. Drilling head according to any one of the preceding claims, **characterized in that** it comprises means (41, 42, 43) for conveying fluid to the tool, comprising a duct running axially through the support, a duct running axially through the tool holder and a pipe connecting the said ducts and which is axially deformable or flexible.
